# EUROPEAN PATENT APPLICATION

(11) **EP 4 671 003 A1**
(43) Date of publication of application: **31.12.2025**
(21) Application number: 23935049.9
(22) Date of filing: 23.11.2023
(51) Int. Cl.: B60G 17/016

(54) **CONTROL METHOD AND SYSTEM FOR ACTIVE SUSPENSION, AND VEHICLE**

(30) Priority: 25.04.2023 CN 202310475942
(71) Applicant: BYD Company Limited, Shenzhen, Guangdong 518118 (CN)
(72) Inventor: LIAO, Yinsheng, Shenzhen, Guangdong 518118 (CN); SUN, Xianmeng, Shenzhen, Guangdong 518118 (CN); LIN, Yuanhui, Shenzhen, Guangdong 518118 (CN); ZHANG, Xun, Shenzhen, Guangdong 518118 (CN); SHAO, Jiatuo, Shenzhen, Guangdong 518118 (CN)
(74) Representative: Aldridge, Henry Alexander
(86) International application number: PCT/CN2023/133653
(87) International publication number: WO 2024/221881

(57) **Abstract**

A control method and system for an active suspension, and a vehicle, which relate to the technical field of vehicle control. The control method for an active suspension comprises: acquiring traveling state data of a vehicle; determining a driving condition of the vehicle according to the traveling state data; and controlling a damper of an active suspension according to a rigidity requirement corresponding to the driving condition of the vehicle.

## Description

### CROSS-REFERENCE TO RELATED APPLICATIONS

The present disclosure claims priority to Chinese Patent Application No. 202310475942.4 filed on April 25, 2023, entitled "CONTROL METHOD AND SYSTEM FOR ACTIVE SUSPENSION, AND VEHICLE", which is incorporated herein by reference in its entirety.

### FIELD

The present disclosure relates to the field of vehicle control technologies, and in particular, to a control method for an active suspension, a control system for an active suspension, and a vehicle.

### BACKGROUND

For traditional passive suspensions, the coil spring rigidity, damping value of the hydraulic damper, and the corresponding bushing rigidity are fixed, which cannot well meet the vehicle's stability requirements under different working conditions.

### SUMMARY

The present disclosure is intended to propose a control method for an active suspension, a system, and a vehicle, so as to adjust the active suspension according to the vehicle's driving conditions and ensure the smooth driving of the vehicle under different working conditions.

In a first aspect, an embodiment of the present disclosure proposes a control method for an active suspension, including: acquiring traveling state data of the vehicle; determining a driving condition of the vehicle according to the traveling state data; and controlling a damper of the active suspension according to a rigidity requirement corresponding to the driving condition of the vehicle.

In addition, the control method for an active suspension according to the embodiment of the present disclosure may further have the following additional technical features:

According to an embodiment of the present disclosure, the step of controlling the damper of the active suspension according to the rigidity requirement corresponding to the driving condition of the vehicle includes: obtaining a corresponding rigidity range according to the driving condition of the vehicle; taking a median value of the rigidity range as the corresponding rigidity requirement, and controlling the damper according to the rigidity requirement.

According to an embodiment of the present disclosure, the step of determining a driving condition of the vehicle according to the traveling state data includes: obtaining a change rate of the depression stroke of an accelerator pedal according to an accelerator pedal opening; if the change rate of the depression stroke of the accelerator pedal is greater than a first preset value, and the transverse acceleration is greater than a first preset acceleration threshold, determining that the driving condition of the vehicle is a starting acceleration condition, wherein the traveling state data includes the accelerator pedal opening and the transverse acceleration.

According to an embodiment of the present disclosure, the step of determining a driving condition of the vehicle according to the traveling state data includes: obtaining a change rate of the depression stroke of a brake pedal according to a brake pedal opening; if the change rate of the depression stroke of the brake pedal is greater than a second preset value, and the transverse acceleration is greater than a second preset acceleration threshold, determining that the driving condition of the vehicle is a braking deceleration condition, wherein the traveling state data includes the brake pedal opening and the transverse acceleration.

According to an embodiment of the present disclosure, the step of determining a driving condition of the vehicle according to the traveling state data includes: calculating a body height difference between two sides of the vehicle according to body heights of the two sides of the vehicle; if a steering wheel angle is greater than a first preset angle threshold, the body height difference is greater than a first preset height difference threshold, and the lateral acceleration is greater than a third preset acceleration threshold, determining that the driving condition of the vehicle is a turning and lane-changing condition, wherein the traveling state data includes the steering wheel angle, the lateral acceleration, and the body heights of the two sides of the vehicle.

According to an embodiment of the present disclosure, the step of determining a driving condition of the vehicle according to the traveling state data includes: if a vehicle speed is greater than a first preset speed threshold, the transverse acceleration is less than a fourth preset acceleration threshold, the lateral acceleration is less than a fifth preset acceleration threshold, the longitudinal acceleration is less than a sixth preset acceleration threshold, and road information is an expressway, determining that the driving condition of the vehicle is a high-speed driving condition, wherein the traveling state data includes the vehicle speed, the transverse acceleration, the lateral acceleration, the longitudinal acceleration, and the road information, and the expressway includes a highway, an elevated road, and a national road.

According to an embodiment of the present disclosure, the step of determining a driving condition of the vehicle according to the traveling state data includes: calculating a body height difference between two sides of the vehicle according to body heights of the two sides of the vehicle; if the longitudinal acceleration is greater than a seventh preset acceleration threshold, the body height difference is greater than a second preset height difference threshold, and road surface roughness is greater than a first preset road surface roughness threshold, determining that the driving condition of the vehicle is a severe road condition, wherein the traveling state data includes the road surface roughness, the longitudinal acceleration, and the body heights of the two sides of the vehicle.

According to an embodiment of the present disclosure, the step of determining a driving condition of the vehicle according to the traveling state data includes: if the road surface roughness is less than a second preset road surface roughness threshold, the transverse acceleration is less than an eighth preset acceleration threshold, the lateral acceleration is less than a ninth preset acceleration threshold, the longitudinal acceleration is less than a tenth preset acceleration threshold, and the road information is a conventional road, determining that the driving condition of the vehicle is a conventional road condition; wherein the traveling state data includes the road surface roughness, the transverse acceleration, the lateral acceleration, the longitudinal acceleration, and the road information, and the conventional road includes an urban road and a county road.

According to an embodiment of the present disclosure, the method further includes: acquiring an operation mode of the vehicle, where the operation mode includes a manual mode and an adaptive mode; when the operation mode is the adaptive mode, executing the step of determining a driving condition of the vehicle according to the traveling state data; when the operation mode is the manual mode, acquiring a driving operation mode of the vehicle; when the driving operation mode is a comfort mode, controlling a damper of an active suspension according to a rigidity requirement corresponding to the comfort mode; when the driving operation mode is a sport mode, controlling a damper of an active suspension according to a rigidity requirement corresponding to the comfort mode.

In a second aspect, an embodiment of the present disclosure proposes a control system for an active suspension, including: an active suspension and a controller, where the active suspension includes a damper, and the controller includes a memory, a processor, and a computer program stored in the memory, and when the computer program is executed by the processor, the control method for the active suspension as described above is implemented.

In addition, the control system for an active suspension according to the embodiment of the present disclosure may further have the following additional technical features:

According to an embodiment of the present disclosure, the damper includes a linear motor and an elastic device, where the linear motor and the elastic device are arranged in parallel, one end of the linear motor and one end of the elastic device are mounted on a vehicle body, and the other end of the linear motor and the other end of the elastic device are mounted on a suspension swing arm.

In a third aspect, an embodiment of the present disclosure proposes a vehicle, including: the control system for an active suspension as described above.

The control method, system for an active suspension and the vehicle according to the embodiments of the present disclosure adjust the rigidity of the active suspension according to the driving condition of the vehicles, so that the vehicle always maintains an optimal driving state, ensuring the stability of the driver's operation, improving the comfort of passengers, and enhancing the driver's driving experience.

### BRIEF DESCRIPTION OF THE DRAWINGS

FIG. 1 is a schematic flowchart of a control method for an active suspension according to an embodiment of the present disclosure;
FIG. 2 is a schematic flowchart of controlling a damper of an active suspension according to a rigidity requirement corresponding to a driving condition of the vehicle according to an embodiment of the present disclosure;
FIG. 3 is a schematic structural diagram of a control system for an active suspension according to an embodiment of the present disclosure;
FIG. 4 is a schematic structural diagram of a controller according to an embodiment of the present disclosure;
FIG. 5 is a schematic structural diagram of a damper according to an embodiment of the present disclosure;
FIG. 6 is a schematic structural diagram of a linear motor according to an embodiment of the present disclosure;
FIG. 7 is a schematic structural diagram of a linear motor according to another embodiment of the present disclosure;
FIG. 8 is a schematic structural diagram of a linear motor according to yet another embodiment of the present disclosure;
FIG. 9 is a schematic structural diagram of a vehicle according to an embodiment of the present disclosure;
FIG. 10 is a schematic structural diagram of a vehicle according to another embodiment of the present disclosure.

### DETAILED DESCRIPTION

The embodiments of the present disclosure are described in detail below. Examples of the embodiments are shown in the accompanying drawings, and the same or similar reference numerals throughout the drawings denote the same or similar elements or elements with the same or similar functions. The embodiments described below with reference to the accompanying drawings are exemplary and are intended to explain the present disclosure, but should not be construed as limiting the present disclosure.

The control method for an active suspension, the system and the vehicle according to the embodiments of the present disclosure are described below with reference to the accompanying drawings.

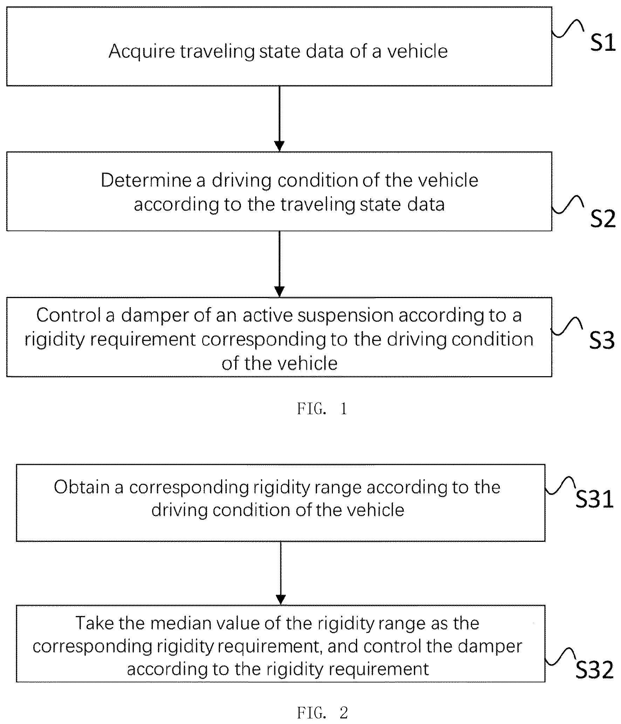

FIG. 1 is a schematic flowchart of a control method for an active suspension according to an embodiment of the present disclosure.

S1: Acquire traveling state data of a vehicle.

The traveling state data may include vehicle state data during vehicle driving, road state data on the driving route, etc. Specifically, the vehicle state data can be collected in real time through corresponding sensors, and the road state data can be obtained through a navigation system and a vehicle-mounted camera.

S2: Determine a driving condition of the vehicle according to the traveling state data.

Specifically, the traveling state data can be processed in real time through the vehicle's signal processing and controller to determine the driving condition of the vehicle.

S3: Control a damper of an active suspension according to a rigidity requirement corresponding to the driving condition of the vehicle.

The control method for an active suspension according to the embodiment of the present disclosure adjusts the rigidity of the active suspension according to the driving condition of the vehicles, so that the vehicle can maintain an optimal driving state under different working conditions, ensuring the stability of the driver's operation.

In some embodiments of the present disclosure, as shown in FIG. 2, the step of controlling a damper of an active suspension according to a rigidity requirement corresponding to the driving condition of the vehicle includes:
S31: Obtain a corresponding rigidity range according to the driving condition of the vehicle.
S32: Take the median value of the rigidity range as the corresponding rigidity requirement, and control the damper according to the rigidity requirement.

It should be noted that the optimal ranges of rigidity requirements corresponding to different driving condition of the vehicles can be calibrated through experiments.

In an embodiment, after controlling the damper according to the driving condition of the vehicle, the traveling state data continues to be acquired. When it is determined to exit the current driving condition of the vehicle according to the real-time acquired traveling state data, the control of the damper is released.

In this embodiment, by taking the median value of the rigidity range as the corresponding rigidity requirement, the problem that the driver and passengers may feel uncomfortable when the maximum or minimum value in the rigidity range is taken as the corresponding rigidity requirement can be avoided.

In some embodiments of the present disclosure, the step of determining a driving condition of the vehicle according to the traveling state data includes:
Obtaining a change rate of the depression stroke of the accelerator pedal according to the accelerator pedal opening; if the change rate of the depression stroke of the accelerator pedal is greater than a first preset value, and the transverse acceleration is greater than a first preset acceleration threshold, determining that the driving condition of the vehicle is a starting acceleration condition, where the traveling state data includes the accelerator pedal opening and the transverse acceleration.

In an embodiment, if the change rate of the depression stroke of the accelerator pedal is not greater than the first preset value, or the transverse acceleration is not greater than the first preset acceleration threshold, it is determined that the driving condition of the vehicle is not the starting acceleration condition.

In this embodiment, by acquiring the brake pedal opening and the transverse acceleration in real time, it can be determined whether the driving condition of the vehicle is the starting acceleration condition. When the vehicle is in the starting acceleration condition, the vehicle adjusts the active suspension in a timely manner according to this condition.

In some embodiments of the present disclosure, determining the driving condition of the vehicle according to the traveling state data includes:
Obtaining a change rate of the depression stroke of the brake pedal according to the brake pedal opening; if the change rate of the depression stroke of the brake pedal is greater than a second preset value, and the transverse acceleration is greater than a second preset acceleration threshold, determining that the driving condition of the vehicle is a braking deceleration condition, where the traveling state data includes the brake pedal opening and the transverse acceleration.

In an embodiment, if the change rate of the depression stroke of the brake pedal is not greater than the second preset value, or the transverse acceleration is not greater than the second preset acceleration threshold, it is determined that the driving condition of the vehicle is not the braking deceleration condition.

In this embodiment, by acquiring the brake pedal opening and the transverse acceleration in real time, it can be determined whether the driving condition of the vehicle is the braking deceleration condition. When the vehicle is in the braking deceleration condition, the vehicle adjusts the active suspension in a timely manner according to this condition.

In some embodiments of the present disclosure, determining a driving condition of the vehicle according to the traveling state data includes:
Calculating a body height difference between two sides of the vehicle according to the body heights of the two sides of the vehicle; if the steering wheel angle is greater than a first preset angle threshold, the body height difference is greater than a first preset height difference threshold, and the lateral acceleration is greater than a third preset acceleration threshold, determining that the driving condition of the vehicle is a turning and lane-changing condition, where the traveling state data includes the steering wheel angle, the lateral acceleration, and the body heights of the two sides of the vehicle.

In an embodiment, if any one of the conditions that the steering wheel angle is not greater than the first preset angle threshold, the body height difference is not greater than the first preset height difference threshold, or the lateral acceleration is not greater than the third preset acceleration threshold is satisfied, it is determined that the driving condition of the vehicle is not the turning and lane-changing condition.

In this embodiment, by acquiring the steering wheel angle, the lateral acceleration, and the body heights of the two sides of the vehicle in real time, it can be determined whether the driving condition of the vehicle is the turning and lane-changing condition. When the vehicle is in the turning and lane-changing condition, the vehicle adjusts the active suspension in a timely manner according to this condition.

In some embodiments of the present disclosure, determining a driving condition of the vehicle according to the traveling state data includes:
If the vehicle speed is greater than the first preset speed threshold, the transverse acceleration is less than the fourth preset acceleration threshold, the lateral acceleration is less than the fifth preset acceleration threshold, the longitudinal acceleration is less than the sixth preset acceleration threshold, and the road information is an expressway, determining that the driving condition of the vehicle is a high-speed driving condition, where the traveling state data includes the vehicle speed, the transverse acceleration, the lateral acceleration, the longitudinal acceleration, and the road information, and the expressway includes a highway, an elevated road, and a national road.

In an embodiment, if any one of the conditions that the vehicle speed is not greater than the first preset speed threshold, the transverse acceleration is not less than the fourth preset acceleration threshold, the lateral acceleration is not less than the fifth preset acceleration threshold, the longitudinal acceleration is not less than the sixth preset acceleration threshold, or the road information is not an expressway is satisfied, it is determined that the driving condition of the vehicle is not the high-speed driving condition.

In this embodiment, by acquiring the vehicle speed, the transverse acceleration, the lateral acceleration, the longitudinal acceleration, and the road information in real time, it can be determined whether the driving condition of the vehicle is the high-speed driving condition. When the vehicle is in the high-speed driving condition, the vehicle adjusts the active suspension in a timely manner according to this condition.

In some embodiments of the present disclosure, determining a driving condition of the vehicle according to the traveling state data includes:
Calculating the body height difference between the two sides of the vehicle according to the body heights of the two sides of the vehicle; if the longitudinal acceleration is greater than the seventh preset acceleration threshold, the body height difference is greater than the second preset height difference threshold, and the road surface roughness is greater than the first preset road surface roughness threshold, determining that the driving condition of the vehicle is a severe road condition, where the traveling state data includes the road surface roughness, the longitudinal acceleration, and the body heights of the two sides of the vehicle.

In an embodiment, if any one of the conditions that the longitudinal acceleration is not greater than the seventh preset acceleration threshold, the body height difference is not greater than the second preset height difference threshold, or the road surface roughness is not greater than the first preset road surface roughness threshold is satisfied, it is determined that the driving condition of the vehicle is not the severe road condition.

In this embodiment, by acquiring the road surface roughness, the longitudinal acceleration, and the body heights of the two sides of the vehicle in real time, it can be determined whether the driving condition of the vehicle is the severe road condition. When the vehicle is in the severe road condition, the vehicle adjusts the active suspension in a timely manner according to this condition.

In some embodiments of the present disclosure, determining a driving condition of the vehicle according to the traveling state data includes:
If the road surface roughness is less than the second preset road surface roughness threshold, the transverse acceleration is less than the eighth preset acceleration threshold, the lateral acceleration is less than the ninth preset acceleration threshold, the longitudinal acceleration is less than the tenth preset acceleration threshold, and the road information is a conventional road, determining that the driving condition of the vehicle is a conventional road condition; where the traveling state data includes the road surface roughness, the transverse acceleration, the lateral acceleration, the longitudinal acceleration, and the road information, and the conventional road includes an urban road and a county road.

In an embodiment, if any one of the conditions that the road surface roughness is not less than the second preset road surface roughness threshold, the transverse acceleration is not less than the eighth preset acceleration threshold, the lateral acceleration is not less than the ninth preset acceleration threshold, the longitudinal acceleration is not less than the tenth preset acceleration threshold, or the road information is not a conventional road is satisfied, it is determined that the driving condition of the vehicle is not the conventional road condition.

In this embodiment, by acquiring the road surface roughness, the transverse acceleration, the lateral acceleration, the longitudinal acceleration, and the road information in real time, it can be determined whether the driving condition of the vehicle is the conventional road condition. When the vehicle is in the conventional road condition, the vehicle adjusts the active suspension in a timely manner according to this condition.

In some embodiments of the present disclosure, the control method for the active suspension further includes:
S21: Acquire an operation mode of the vehicle, where the operation mode includes a manual mode and an adaptive mode.
S22: When the operation mode is the adaptive mode, execute the step of determining a driving condition of the vehicle according to the traveling state data.
S23: When the operation mode is the manual mode, acquire a driving operation mode of the vehicle; when the driving operation mode is a comfort mode, control a damper of an active suspension according to a rigidity requirement corresponding to the comfort mode; when the driving operation mode is a sport mode, control a damper of an active suspension according to a rigidity requirement corresponding to the comfort mode.

In this embodiment, the driver can actively set the vehicle to the comfort mode or the sport mode according to his own driving habits and understanding of the familiar road conditions, which can make the control of the vehicle more intelligent and flexible, thereby improving the vehicle driving performance and driving experience.

It should be noted that the structure and working principle of the active suspension according to the embodiment of the present disclosure will be described in the detailed description of the control system for the active suspension below.

Corresponding to the above embodiments, the present disclosure also proposes a control system for an active suspension.

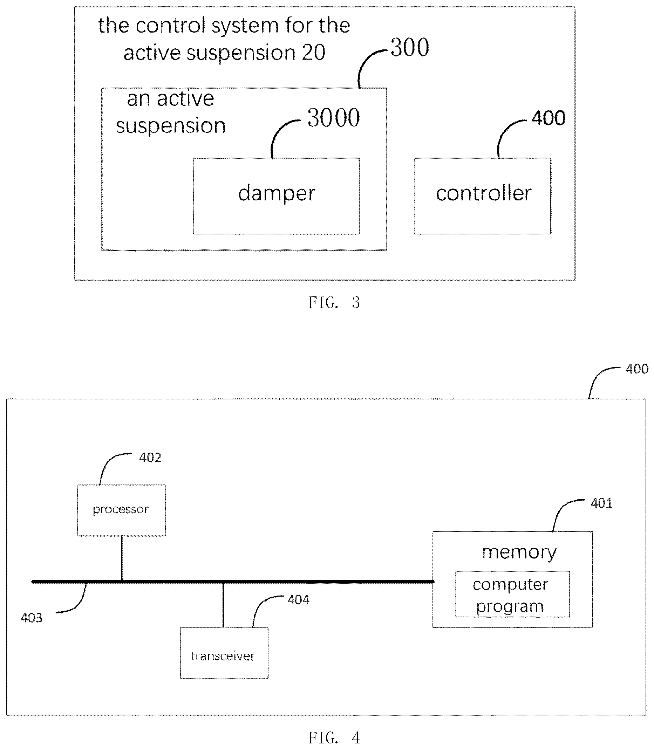

FIG. 3 is a schematic structural diagram of a control system for an active suspension according to an embodiment of the present disclosure.

As shown in FIG. 3, the control system 20 for the active suspension includes: an active suspension 300 and a controller 400, where the active suspension includes a damper 3000. The controller 400 includes: a memory 401, a processor 402, and a computer program stored in the memory 401, and when the computer program is executed by the processor, the control method for the active suspension as described above is implemented.

In an embodiment, as shown in FIG. 4, the memory 401 and the processor 402 in the controller 400 are connected, for example, through a bus 403. In an embodiment, the controller 400 may further include a transceiver 404. When the computer program is executed by the processor 402, the control method for the active suspension as described above is implemented. It should be noted that in practical applications, the number of transceivers 404 is not limited to one, and the structure of the controller 400 does not constitute a limitation on the embodiment of the present disclosure.

The processor 402 may be a CPU (Central Processing Unit), a general-purpose processor, a DSP (Digital Signal Processor), an ASIC (Application Specific Integrated Circuit), an FPGA (Field Programmable Gate Array), or other programmable logic devices, transistor logic devices, hardware components, or any combination thereof. It can implement or execute various exemplary logical blocks, modules, and circuits described in conjunction with the content of the present disclosure. The processor 402 may also be a combination of computing functions, for example, including a combination of one or more microprocessors, a combination of a DSP and a microprocessor, and the like.

The bus 403 may include a path for transmitting information between the above components. The bus 403 may be a PCI (Peripheral Component Interconnect) bus, an EISA (Extended Industry Standard Architecture) bus, or the like. The bus 403 may be divided into an address bus, a data bus, a control bus, and the like. For the convenience of representation, only one thick line is used in FIG. 4, but it does not mean that there is only one bus or one type of bus.

The memory 401 is used to store a computer program corresponding to the control method for the active suspension according to the above embodiment of the present disclosure, and the computer program is controlled and executed by the processor 402. The processor 402 is used to execute the computer program stored in the memory 401, so as to implement the content shown in the foregoing method embodiments.

The controller 400 includes, but is not limited to, mobile terminals such as a PDA (Personal Digital Assistant) and a PAD (Tablet Computer). The controller 400 shown in FIG. 4 is only an example, and should not limit the functions and scope of use of the embodiments of the present disclosure.

The control system 20 for the active suspension according to the embodiment of the present disclosure can enable the vehicle to always maintain an optimal driving state, ensuring the stability of the driver's operation, improving the comfort of passengers, and enhancing the driver's driving experience.

In some embodiments of the present disclosure, the damper 3000 includes a linear motor 3001 and an elastic device 3002, the linear motor 3001 and the elastic device 3002 are arranged in parallel, one end of the linear motor 3001 and one end of the elastic device 3002 are mounted on the vehicle body 100, and the other end of the linear motor 3001 and the other end of the elastic device 3002 are mounted on the suspension swing arm 200.

In an embodiment, the elastic device 3002 may be a coil spring.

In this embodiment, with the parallel combination of the linear motor 3001 and the elastic device 3002, in case of failure of the linear motor 3001, the elastic device 3002 can still provide suspension rigidity to support the stable driving of the vehicle 10.

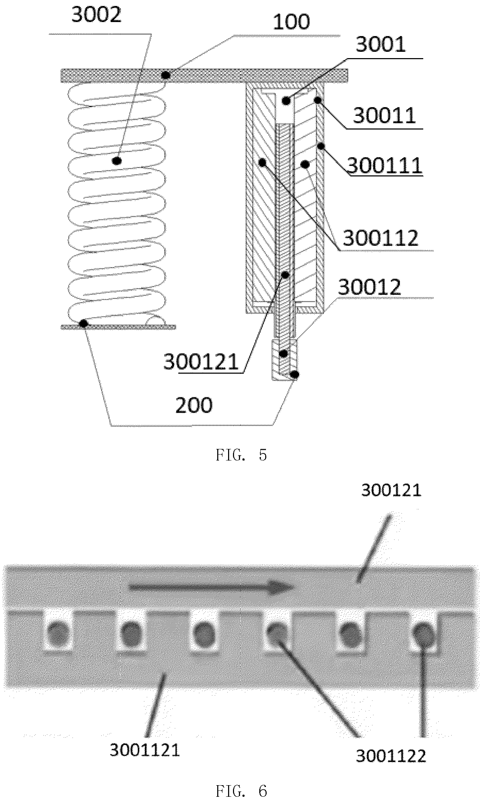

In some embodiments of the present disclosure, as shown in FIG. 5, the linear motor 3001 includes a stator mechanism 30011 and a mover mechanism 30012, one end of the stator mechanism 30011 is mounted on the vehicle body 100, one end of the mover mechanism 30012 is inserted into the stator mechanism 30011, and the other end of the mover mechanism 30012 is mounted on the suspension swing arm 200. After inputting current parameters to the stator mechanism 30011, the mover mechanism 30012 can perform linear reciprocating motion along the stator mechanism 30011.

The linear motor 3001 has advantages such as fast response speed (up to 3ms at the fastest), precise control, and small displacement error (the error can reach the level of 0.01µm). The use of the linear motor 3001 in the vehicle 10 can provide sufficient suspension rigidity while providing optimal damping force, achieving a damping effect of attenuating vibration. By using the linear motor 3001 as an actuator for adjusting suspension rigidity, there is no need for intermediate energy transmission and storage media. For new energy vehicles, the suspension rigidity can be directly controlled through electric energy, realizing rapid adjustment of the vehicle body 100.

In some embodiments of the present disclosure, as shown in FIG. 5, the stator mechanism 30011 includes a housing 300111 and at least two stators 300112, the at least two stators 300112 are arranged in the housing 300111, and a wiring port is led out from the outer wall of the housing 300111 for inputting current parameters, and one end of the housing 300111 is fixed on the vehicle body 100; the mover mechanism 30012 includes a mover 300121, one end of the mover 300121 extends into the housing 300111 and is inserted between the at least two stators 300112, the other end of the mover 300121 extends out of the housing 300111 and is connected to the suspension swing arm 200 or the steering knuckle, and the mover 300121 can perform linear reciprocating motion along the at least two stators 300112.

It should be noted that a certain gap is left between the stator 300112 and the mover 300121.

In this embodiment, the linear motor 3001 with this structure can realize linear and continuous adjustment of suspension rigidity, which can meet the requirements of different vehicle models and drivers for vehicle suspension rigidity.

In some embodiments of the present disclosure, as shown in FIG. 6, the stator 300112 includes a stator core 3001121 and a plurality of stator coils 3001122; the mover 300121 includes a mover rod 3001211 and a plurality of permanent magnets 3001212, and the plurality of permanent magnets 3001212 are uniformly arranged in parallel on the mover rod 3001211; among the plurality of permanent magnets 3001212, adjacent permanent magnets 3001212 are arranged with opposite magnetic poles, and the plurality of stator coils 3001122 form a changing magnetic field through input current parameters to control the displacement distance and direction of the mover 300121.

Specifically, the movement direction of the mover rod 3001211 can be controlled by controlling the direction of the current input to the stator coil 3001122 to generate a predetermined magnetic field direction; the force on the permanent magnet 3001212 on the mover rod 3001211 can be controlled by controlling the magnitude of the current input to the stator coil 3001122 to generate a predetermined magnetic field strength, thereby controlling the movement distance of the mover rod 3001211.

For example, a first displacement sensor is installed at the end of the mover 300121 to provide the displacement Δx of the mover 300121 to the current output control unit, thereby controlling the vehicle to output a predetermined current. The linear relationship between the mover thrust F and the mover displacement Δx is F=K_{T}×Δx, the rigidity of the elastic device is Ks, and the rigidity at the suspension wheel center is K=(K_{T}·K_{S})/(K_{T}+K_{S}).

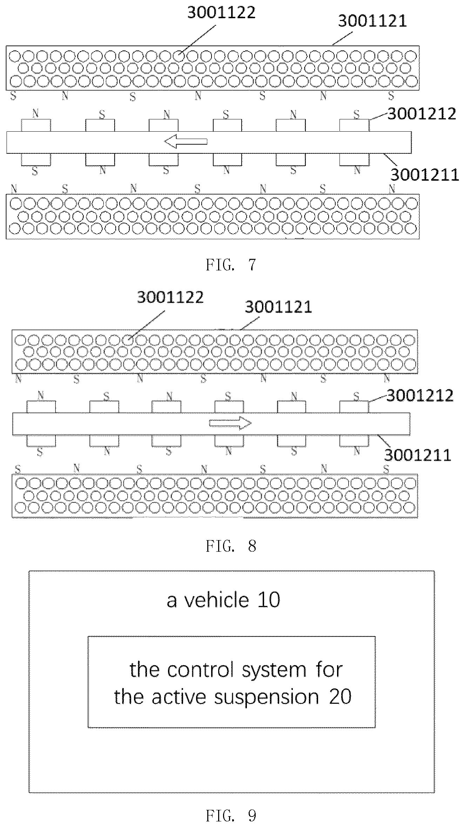

In an embodiment, as shown in FIG. 7, when the mover rod 3001211 needs to move to the left, the current parameters input to the plurality of stator coils 3001122 can be controlled to generate a changing magnetic field around the mover rod 3001211, and according to the principle that opposite poles attract and like poles repel, the mover rod 3001211 is pushed to move in a predetermined linear direction, that is, to the left.

In an embodiment, as shown in FIG. 8, when the mover rod 3001211 needs to move to the right, the current parameters input to the plurality of stator coils 3001122 can also be controlled to push the mover rod 3001211 to move to the right.

Corresponding to the foregoing embodiments, the present disclosure also proposes a vehicle.

FIG. 9 is a schematic structural diagram of a vehicle according to an embodiment of the present disclosure.

As shown in FIG. 9, the vehicle 10 includes: the control system 20 for the active suspension as described above.

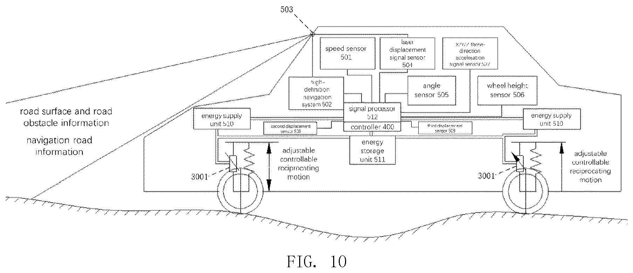

As a feasible implementation, as shown in FIG. 10, the vehicle 10 further includes:
A speed sensor 501 for acquiring the movement speed of the vehicle; a high-definition navigation system 502 for positioning the vehicle's driving road and determining road information; a road surface obstacle recognition system 503 for scanning and acquiring road surface roughness; a laser displacement signal sensor 504 for cooperating with the road surface obstacle recognition system 503 to provide road surface roughness, obstacle information, and pedestrian information to the controller 400, calculate the displacement difference, predict the driving time according to the vehicle speed, and assist the active suspension in preparing in advance and making prediction procedures; an angle sensor 505 for acquiring the angle variation of the steering wheel; wheel height sensors 506 for acquiring the body heights of both sides of the vehicle; X/Y/Z three-direction acceleration signal sensors 507 for analyzing the transverse, lateral, and longitudinal accelerations of the vehicle's driving state; a second displacement sensor 508 for acquiring the opening of the accelerator pedal; a third displacement sensor 509 for acquiring the opening of the brake pedal; an energy supply unit 510 for providing current to the active suspension 300; an energy storage unit 511 for storing electrical energy; and a signal processor 512 for processing various signals.

Next, the adjustment process of the active suspension 300 during vehicle driving is explained:
The signal processor 512 analyzes, filters, and calculates the corresponding signal values and provides them to the controller 400.

The controller 400 judges the driving condition of the vehicle in combination with the signal values and calculates the suspension rigidity requirement.

The controller 400 controls the motor to output corresponding current.

The controller 400 adjusts the current magnitude and direction according to the signal value of the first sensor.

According to the input current, the thrust or pull force of the linear motor 3001 is adjusted to adjust the rigidity of the active suspension 300.

The controller 400 first judges whether there is a manual mode input for the vehicle 10, and if so, adjusts the rigidity of the active suspension 300 according to the manual mode.

It should be understood that the logic and/or steps represented in the flowcharts or otherwise described herein, for example, can be considered as a sequenced list of executable instructions for implementing logical functions, and can be specifically implemented in any computer-readable medium for use by an instruction execution system, apparatus, or device (such as a computer-based system, a system including a processor, or other systems that can obtain instructions from the instruction execution system, apparatus, or device and execute the instructions), or in combination with these instruction execution systems, apparatuses, or devices. For the purposes of this specification, a "computer-readable medium" can be any device that can contain, store, communicate, propagate, or transmit a program for use by or in combination with an instruction execution system, apparatus, or device. More specific examples (a non-exhaustive list) of the computer-readable medium include the following: an electrical connection portion (electronic device) with one or more wires, a portable computer disk cartridge (magnetic device), a random access memory (RAM), a read-only memory (ROM), an erasable editable read-only memory (EPROM or flash memory), an optical fiber device, and a portable compact disc read-only memory (CDROM). In addition, the computer-readable medium can even be paper or other suitable media on which the program can be printed, because the program can be obtained electronically by, for example, optically scanning the paper or other media, then editing, interpreting, or otherwise processing as necessary, and then storing it in computer memory.

Meanwhile, each part of the present disclosure can be implemented by hardware, software, firmware, or a combination thereof. In the foregoing embodiments, multiple steps or methods can be implemented by software or firmware stored in a memory and executed by a suitable instruction execution system. For example, if implemented by hardware, as in another embodiment, it can be implemented by any one or a combination of the following technologies known in the art: discrete logic circuits with logic gates for implementing logic functions on data signals, application-specific integrated circuits with appropriate combinational logic gates, programmable gate arrays (PGA), field programmable gate arrays (FPGA), etc.

In the description of this specification, descriptions with reference to the terms "one embodiment", "some embodiments", "examples", "specific examples", or "some examples" etc. mean that specific features, structures, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials, or characteristics can be combined in an appropriate manner in any one or more embodiments or examples.

In addition, the terms "first" and "second" are only used for descriptive purposes and cannot be understood as indicating or implying relative importance or implicitly indicating the number of indicated technical features. Therefore, the features defined with "first" and "second" can explicitly or implicitly include at least one of the features. In the description of the present disclosure, "multiple" means at least two, such as two, three, etc., unless otherwise explicitly and specifically defined.

Although the embodiments of the present disclosure have been shown and described above, it can be understood that, the above embodiments are exemplary and should not be understood as limitation to the present disclosure. A person of ordinary skill in the art can make changes, modifications, replacements, or variations to the foregoing embodiments within the scope of the present disclosure.

## Claims

1. A control method for an active suspension, comprising:
acquiring traveling state data of a vehicle;
determining a driving condition of the vehicle according to the traveling state data;
controlling a damper of an active suspension according to a rigidity requirement corresponding to the driving condition of the vehicle.

2. The control method for an active suspension according to claim 1, wherein the step of controlling a damper of an active suspension according to a rigidity requirement corresponding to the driving condition of the vehicle comprises:
obtaining a corresponding rigidity range according to the driving condition of the vehicle;
taking the median value of the rigidity range as the corresponding rigidity requirement, and controlling the damper according to the rigidity requirement.

3. The control method for an active suspension according to claim 1 or 2, wherein the step of determining a driving condition of the vehicle according to the traveling state data comprises:
obtaining a change rate of a depression stroke of an accelerator pedal according to an accelerator pedal opening;
if the change rate of the depression stroke of the accelerator pedal is greater than a first preset value, and a transverse acceleration is greater than a first preset acceleration threshold, determining that the driving condition of the vehicle is a starting acceleration condition, wherein the traveling state data comprises the accelerator pedal opening and the transverse acceleration.

4. The control method for an active suspension according to any one of claims 1 to 3, wherein the step of determining a driving condition of the vehicle according to the traveling state data comprises:
obtaining a change rate of a depression stroke of a brake pedal according to a brake pedal opening;
if the change rate of the depression stroke of the brake pedal is greater than a second preset value, and the transverse acceleration is greater than a second preset acceleration threshold, determining that the driving condition of the vehicle is a braking deceleration condition, wherein the traveling state data comprises the brake pedal opening and the transverse acceleration.

5. The control method for an active suspension according to any one of claims 1 to 4, wherein the step of determining a driving condition of the vehicle according to the traveling state data comprises:
calculating a body height difference between two sides of the vehicle according to body heights of the two sides of the vehicle;
if a steering wheel angle is greater than a first preset angle threshold, the body height difference is greater than a first preset height difference threshold, and a lateral acceleration is greater than a third preset acceleration threshold, determining that the driving condition of the vehicle is a turning and lane-changing condition, wherein the traveling state data comprises the steering wheel angle, the lateral acceleration, and the body heights of the two sides of the vehicle.

6. The control method for an active suspension according to any one of claims 1 to 5, wherein the step of determining a driving condition of the vehicle according to the traveling state data comprises:
if a vehicle speed is greater than a first preset speed threshold, the transverse acceleration is less than a fourth preset acceleration threshold, the lateral acceleration is less than a fifth preset acceleration threshold, a longitudinal acceleration is less than a sixth preset acceleration threshold, and road information is an expressway, determining that the driving condition of the vehicle is a high-speed driving condition, wherein the traveling state data comprises the vehicle speed, the transverse acceleration, the lateral acceleration, the longitudinal acceleration, and the road information, and the expressway comprises a highway, an elevated road, and a national road.

7. The control method for an active suspension according to any one of claims 1 to 6, wherein the step of determining a driving condition of the vehicle according to the traveling state data comprises:
calculating the body height difference between the two sides of the vehicle according to the body heights of the two sides of the vehicle;
if the longitudinal acceleration is greater than a seventh preset acceleration threshold, the body height difference is greater than a second preset height difference threshold, and road surface roughness is greater than a first preset road surface roughness threshold, determining that the driving condition of the vehicle is a severe road condition, wherein the traveling state data comprises the road surface roughness, the longitudinal acceleration, and the body heights of the two sides of the vehicle.

8. The control method for an active suspension according to any one of claims 1 to 7, wherein the step of determining a driving condition of the vehicle according to the traveling state data comprises:
if the road surface roughness is less than a second preset road surface roughness threshold, the transverse acceleration is less than an eighth preset acceleration threshold, the lateral acceleration is less than a ninth preset acceleration threshold, the longitudinal acceleration is less than a tenth preset acceleration threshold, and the road information is a conventional road, determining that the driving condition of the vehicle is a conventional road condition; wherein the traveling state data comprises the road surface roughness, the transverse acceleration, the lateral acceleration, the longitudinal acceleration, and the road information, and the conventional road includes an urban road and a county road.

9. The control method for an active suspension according to any one of claims 1 to 8, wherein the method further comprises:
acquiring an operation mode of the vehicle, wherein the operation mode comprises a manual mode and an adaptive mode;
when the operation mode is the adaptive mode, executing the step of determining a driving condition of the vehicle according to the traveling state data;
when the operation mode is the manual mode, acquiring a driving operation mode of the vehicle; when the driving operation mode is a comfort mode, controlling a damper of an active suspension according to a rigidity requirement corresponding to the comfort mode; when the driving operation mode is a sport mode, controlling a damper of an active suspension according to a rigidity requirement corresponding to the comfort mode.

10. A control system for an active suspension, comprising: an active suspension and a controller, wherein the active suspension comprises a damper, and the controller comprises a memory, a processor, and a computer program stored in the memory, and when the computer program is executed by the processor, the control method for the active suspension according to any one of claims 1 to 9 is implemented.

11. The control system for an active suspension according to claim 10, wherein the damper comprises a linear motor and an elastic device, the linear motor and the elastic device are arranged in parallel, one end of the linear motor and one end of the elastic device are mounted on a vehicle body, and the other end of the linear motor and the other end of the elastic device are mounted on a suspension swing arm.

12. A vehicle, comprising: the control system for an active suspension according to claim 10 or 11.
